# EUROPEAN PATENT APPLICATION

(11) **EP 4 737 236 A1**
(43) Date of publication of application: **06.05.2026**
(21) Application number: 24838449.7
(22) Date of filing: 17.05.2024
(51) Int. Cl.: B60T 13/74, H02K 7/116

(54) **ELECTROMECHANICAL BRAKE DEVICE HAVING BRAKE MOTOR AND CONTROLLER SEPARATED FROM EACH OTHER, AND VEHICLE**

(30) Priority: 13.07.2023 CN 202321844839 U
(71) Applicant: Huawei Digital Power Technologies Co., Ltd., Shenzhen, Guangdong 518043 (CN)
(72) Inventor: MAO, Yan, Shenzhen, Guangdong 518043 (CN); ZHU, Lingfeng, Shenzhen, Guangdong 518043 (CN); WU, Xiaopeng, Shenzhen, Guangdong 518043 (CN); SUN, Yi, Shenzhen, Guangdong 518043 (CN)
(74) Representative: Maiwald GmbH
(86) International application number: PCT/CN2024/093997
(87) International publication number: WO 2025/011190

(57) **Abstract**

This application provides an electro-mechanical brake apparatus with a brake motor and a controller separated, and a vehicle. The electro-mechanical brake apparatus includes a brake motor, a gearbox, and a controller, the controller is configured to drive the brake motor to rotate, and the brake motor is configured to drive, by using the gearbox, a brake to brake a vehicle. The gearbox and the controller are accommodated in a same housing, and the housing is fastened to the brake motor. The housing includes a spacer, in a direction of a motor shaft of the brake motor, the brake motor, the gearbox, the spacer, and the controller are sequentially arranged, and the controller passes through the spacer and the gearbox and is electrically connected to the brake motor. In this application, the brake motor and the controller of the electro-mechanical brake apparatus are on two sides of the gearbox, effectively utilizing space and reducing a size of the electro-mechanical brake apparatus.

## Description

### CROSS-REFERENCE TO RELATED APPLICATIONS

This application claims priority to Chinese Patent Application No. 202321844839.4, filed with the China National Intellectual Property Administration on July 13, 2023, entitled "ELECTRO-MECHANICAL BRAKE APPARATUS WITH BRAKE MOTOR AND CONTROLLER SEPARATED, AND VEHICLE", which is incorporated herein by reference in its entirety.

### TECHNICAL FIELD

This application relates to the field of vehicle technologies, and specifically, to an electro-mechanical brake apparatus with a brake motor and a controller separated, and a vehicle.

### BACKGROUND

An electro-mechanical brake (electro-mechanical brake, EMB) apparatus uses a motor and a mechanical transmission mechanism to drive a brake to implement braking. The electro-mechanical brake apparatus features a simple structure, high responsiveness, a stable load transfer, no need to dispose a hydraulic pipe, and the like, and has high transmission efficiency. The electro-mechanical brake apparatus can improve safety, maneuverability, and comfort of a vehicle.

A motor, a mechanical transmission mechanism, and a brake in an existing electro-mechanical brake apparatus are independent components, and an integration level is low. As a result, the electro-mechanical brake apparatus is too large in size to be arranged in the vehicle. A controller of the motor is usually fastened to the top of the motor, increasing an overall height of the electro-mechanical brake apparatus.

### SUMMARY

This application provides an electro-mechanical brake apparatus with a brake motor and a controller separated, and a vehicle. The electro-mechanical brake apparatus is small in size. This application specifically includes the following solutions.

According to a first aspect, this application provides an electro-mechanical brake apparatus with a brake motor and a controller separated. The electro-mechanical brake apparatus includes a brake motor, a gearbox, and a controller, the controller is configured to drive the brake motor to rotate, and the brake motor is configured to drive, by using the gearbox, a brake to brake a vehicle;
the gearbox and the controller are accommodated in a same housing, and the housing is fastened to the brake motor; and
the housing includes a spacer, in a direction of a motor shaft of the brake motor, the brake motor, the gearbox, the spacer, and the controller are sequentially arranged, and the controller passes through the spacer and the gearbox and is electrically connected to the brake motor.

In this application, the electro-mechanical brake apparatus drives, by using the brake motor, the gearbox to rotate, to drive the brake to brake the vehicle. The brake motor is controlled by the controller, the controller and the brake motor are on two opposite sides of the gearbox, and the controller passes through the gearbox and is electrically connected to the brake motor. A main structure of the controller is usually plate-shaped. The controller is arranged in a direction perpendicular to the direction of the motor shaft of the brake motor, so that space occupied by the controller in the electro-mechanical brake apparatus can be reduced, and an overall size of the electro-mechanical brake apparatus can be reduced.

In this application, the electro-mechanical brake apparatus further provides sealing protection on the controller by using the spacer, to avoid direct contact between a lubricant in the gearbox and the controller. This can ensure that the controller reliably controls the brake motor.

In an implementation, the controller includes a circuit board and a transmission member;
the circuit board and the spacer are arranged in parallel in the direction of the motor shaft of the brake motor; and
in the direction of the motor shaft of the brake motor, the transmission member passes through the spacer and the gearbox and is electrically connected between the brake motor and the circuit board.

In this implementation, the circuit board of the controller and the spacer are arranged in parallel, so that space occupied by the circuit board in the housing can be reduced. In addition, the transmission member passes through the spacer and the gearbox, so that the circuit board can be electrically connected to the brake motor.

In an implementation, the housing includes a detachable cover, and the circuit board and the cover are arranged in parallel in the direction of the motor shaft of the brake motor.

In an implementation, the circuit board is fastened to the cover and is fastened in the housing with the cover.

In an implementation, the spacer is fastened to the cover, and the spacer and the circuit board are fastened in the housing with the cover.

In the foregoing implementation, the cover of the housing is disposed on a side close to the circuit board, to facilitate installation and maintenance of the circuit board. Moreover, the cover is disposed in parallel with the circuit board and the spacer, to compress a size of the housing. In addition, the circuit board is fastened to the cover, and the spacer and the circuit board are fastened to the cover, facilitating installation and sealing protection of the circuit board in the housing.

In an implementation, a material of the spacer is resin, the spacer is formed on the cover through injection molding, and the spacer is in at least partial contact with the circuit board to fasten the circuit board.

In this implementation, the spacer is formed on the cover through injection molding, and an injection molding process of the spacer further synchronously implements fastening of the circuit board on the cover, to ensure that the spacer seals and protects the circuit board, and simplify an assembly process of the circuit board.

In an implementation, the transmission member includes a conductive copper bar, and the controller transmits a power signal to the brake motor by using the conductive copper bar; and
the conductive copper bar extends in a direction parallel to the direction of the motor shaft of the brake motor, and an outer surface of the conductive copper bar is coated with an insulation layer.

In an implementation, the transmission member includes a transmission line, and the controller transmits a control signal to the brake motor through the transmission line; and
a line groove is provided in the housing in the direction of the motor shaft of the brake motor, and the transmission line is embedded in the line groove to pass through the spacer and the gearbox.

In the foregoing implementation, the controller transmits the power signal by using the conductive copper bar, to ensure that transmit power of the transmission member meets an operating requirement of the brake motor. In addition, the controller transmits the control signal through the transmission line, and the transmission line extends in the line groove in the housing, to save space occupied by the transmission line in the electro-mechanical brake apparatus, and ensure reliable transmission of the control signal.

In an implementation, the gearbox includes an input shaft, the input shaft is in coaxial transmission with the motor shaft, the electro-mechanical brake apparatus includes a position sensor configured to monitor a rotation angle of the brake motor, and the position sensor includes a stator and a rotor;
the input shaft includes an extension section extending toward the circuit board and passing through the spacer, and the rotor is coaxially fastened to the extension section; and
the stator is fastened to the circuit board, and a central axis of the stator coincides with a rotation axis of the input shaft.

In this implementation, because the input shaft of the gearbox is in coaxial transmission with the motor shaft of the brake motor, the input shaft of the gearbox can reflect a rotation speed of the motor shaft. The position sensor is disposed between the input shaft of the gearbox and the circuit board, facilitating a disposition of the position sensor. In addition, the circuit board may be directly electrically connected to the stator to receive a detection signal, eliminating a line between the position sensor and the circuit board, and simplifying internal wiring of the electro-mechanical brake apparatus.

In an implementation, the stator of the position sensor is fastened to a surface that is of the circuit board and that is close to the gearbox; and
the position sensor is a magnetoresistive sensor, and in an axial direction of the input shaft, the rotor and the stator of the position sensor are spaced apart; or
the position sensor is an electric eddy current sensor or a photoelectric sensor, the stator of the position sensor is coaxially sleeved on a periphery of the rotor, and in a radial direction of the input shaft, an outer circumferential surface of the rotor and an inner circumferential surface of the stator are spaced apart.

In this implementation, the rotor and the stator of the magnetoresistive sensor are spaced apart in the axial direction of the input shaft, and the rotor and the stator of the electric eddy current sensor or the photoelectric sensor are spaced apart in the radial direction of the input shaft. Because a position between the circuit board and the gearbox is relatively fixed, different types of position sensors can separately implement reliable installation and monitoring functions.

In an implementation, the spacer is provided with a through hole that allows the motor shaft to pass through, the housing of the gearbox includes an oil sealing member, and an outer circumferential surface of the oil sealing member is attached to an inner circumferential surface of the through hole to seal the through hole; and
the position sensor is a magnetoresistive sensor, and the oil sealing member is sleeved on the periphery of the rotor; or
the position sensor is an electric eddy current sensor or a photoelectric sensor, and the oil sealing member is sleeved on a periphery of the motor shaft.

In this implementation, the oil sealing member is disposed between the input shaft and the spacer, or the oil sealing member is disposed between the rotor and the spacer, so that the through hole of the spacer can be effectively sealed, and the following case can be avoided: A lubricant in the gearbox passes through the through hole and is in direct contact with the controller. This can ensure that the controller reliably controls the brake motor.

In an implementation, in an axial direction of the motor shaft, a thickness of the stator is greater than a thickness of the circuit board, and the stator is embedded in a positioning hole of the circuit board.

In this implementation, the stator is embedded in the positioning hole of the circuit board, so that after the stator is assembled, a thickness of the circuit board can be compressed, and space occupied by the circuit board in the housing can be reduced.

In an implementation, the motor shaft of the brake motor and the input shaft of the gearbox are integrated.

In an implementation, the electro-mechanical brake apparatus includes a locking mechanism, the locking mechanism is in a transmission connection to the gearbox, and the controller is further configured to: drive a locking motor of the locking mechanism to rotate to lock or release a gear shaft of the gearbox and control the gearbox for transmission.

In this implementation, the controller is further configured to drive the locking motor of the locking mechanism to operate, so that a structure in which the controller is separately disposed in the locking mechanism is eliminated, and integration of the electro-mechanical brake apparatus is further improved.

In an implementation, in an axial direction of the motor shaft, the locking motor of the locking mechanism and the circuit board are located on a same side of the spacer, and the locking mechanism passes through the spacer and is in a transmission connection to the gear shaft of the gearbox.

In this implementation, the locking motor is disposed on a side that is of the spacer and that is close to the circuit board, so that the spacer can be used to form sealing protection for the locking motor. This ensures reliable operating of the locking mechanism.

According to a second aspect, this application provides a vehicle, including a wheel and the electro-mechanical brake apparatus provided in any one of the foregoing implementations. The electro-mechanical brake apparatus is configured to brake the wheel.

The vehicle provided in the second aspect of this application is braked by using the electro-mechanical brake apparatus provided in the first aspect of this application. Because the electro-mechanical brake apparatus provided in the first aspect of this application is small in size, internal space of the vehicle in this application is saved.

### BRIEF DESCRIPTION OF DRAWINGS

FIG. 1 is a diagram of an operating scenario of a vehicle according to an embodiment of this application;
FIG. 2 is a planar diagram of a partial structure of an electro-mechanical brake apparatus from a side perspective according to an embodiment of this application;
FIG. 3 is a diagram of an appearance structure of a brake from a side perspective according to an embodiment of this application;
FIG. 4 is a sectional diagram of a structure of the brake from a side perspective according to the embodiment shown in FIG. 3 of this application;
FIG. 5 is an exploded diagram of a structure of an electro-mechanical brake apparatus from a side perspective according to an embodiment of this application;
FIG. 6 is an exploded diagram of a structure of the electro-mechanical brake apparatus from another side perspective according to the embodiment shown in FIG. 5 of this application;
FIG. 7 is an exploded diagram of structures of a housing and a controller of an electro-mechanical brake apparatus from a side perspective according to an embodiment of this application;
FIG. 8 is a diagram of a structure of the electro-mechanical brake apparatus with a part of a structure omitted from a side perspective according to the embodiment shown in FIG. 7 of this application;
FIG. 9 is a sectional diagram of a structure of the electro-mechanical brake apparatus at a position A-A from a side perspective according to the embodiment shown in FIG. 8 of this application;
FIG. 10 is a diagram of a structure of an electro-mechanical brake apparatus with a part of a structure omitted from a side perspective according to an embodiment of this application;
FIG. 11 is a diagram of a structure of an electro-mechanical brake apparatus with a part of a structure omitted from a side perspective according to an embodiment of this application;
FIG. 12 is a sectional diagram of a structure of the electro-mechanical brake apparatus from a side perspective according to the embodiment shown in FIG. 10 of this application;
FIG. 13 is an exploded diagram of a structure of the electro-mechanical brake apparatus from a side perspective according to the embodiment shown in FIG. 10 of this application;
FIG. 14 is a sectional diagram of a structure of an electro-mechanical brake apparatus with a part of a structure omitted from a side perspective according to an embodiment of this application;
FIG. 15 is an enlarged diagram of a partial structure of the electro-mechanical brake apparatus at a position B from a side perspective according to the embodiment shown in FIG. 14 of this application;
FIG. 16 is a sectional diagram of a structure of a brake motor of an electro-mechanical brake apparatus from a side perspective according to an embodiment of this application; and
FIG. 17 is a diagram of a partial structure of a brake motor of an electro-mechanical brake apparatus from a side perspective according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In the descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus with a brake motor and a controller separated. The electro-mechanical brake apparatus includes a brake motor, a gearbox, and a controller, the controller is configured to drive the brake motor to rotate, and the brake motor is configured to drive, by using the gearbox, a brake to brake a vehicle. The gearbox and the controller are accommodated in a same housing, and the housing is fastened to the brake motor. The housing includes a spacer, in a direction of a motor shaft of the brake motor, the brake motor, the gearbox, the spacer, and the controller are sequentially arranged, and the controller passes through the spacer and the gearbox and is electrically connected to the brake motor. In this application, an overall size of the electro-mechanical brake apparatus is reduced through the foregoing arrangement.

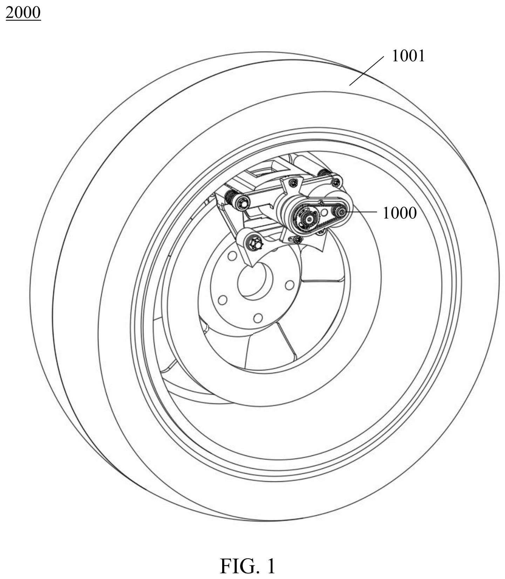

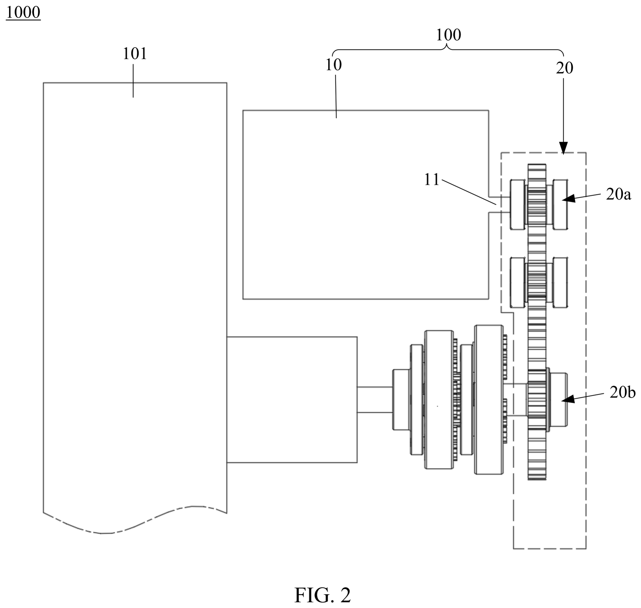

FIG. 1 is a diagram of an operating scenario of a vehicle 2000 according to an embodiment of this application. FIG. 2 is a planar diagram of a partial structure of an electro-mechanical brake apparatus 100 from a side perspective according to an embodiment of this application. As shown in FIG. 1 and FIG. 2, the vehicle 2000 provided in this embodiment of this application includes a wheel 1001 and an electro-mechanical brake system 1000. The electro-mechanical brake system 1000 includes an electro-mechanical brake apparatus 100 and a brake 101. The electro-mechanical brake apparatus 100 is fastened to the wheel 1001, and the brake 101 is configured to brake the wheel 1001 to brake the vehicle 2000. The wheel 1001 is configured to implement a function of the vehicle 2000 to travel on the ground. The electro-mechanical brake apparatus 100 is configured to brake the wheel 1001, to control and adjust a rotation speed of the wheel 1001, and further control traveling of the vehicle 2000.

In the embodiment shown in FIG. 1, only one wheel 1001 and one electro-mechanical brake apparatus 100 are used as examples for description. In an actual application scenario, the electro-mechanical brake apparatus 100 may be correspondingly disposed on each wheel 1001 of the vehicle 2000.

As shown in FIG. 2, the electro-mechanical brake apparatus 100 in this application includes a brake motor 10 and a gearbox 20. The brake motor 10 is configured to provide a driving force for the brake 101, to drive the brake 101 to achieve braking effect on the wheel 1001. The gearbox 20 is in a transmission connection between the brake motor 10 and the brake 101, and the brake motor 10 drives, by using the gearbox 20, the brake 101 to brake the vehicle 2000.

Specifically, as shown in FIG. 2, the brake motor 10 includes a motor shaft 11, and the brake motor 10 and the gearbox 20 are adjacently fastened in an axial direction of the motor shaft 11. An end of the motor shaft 11 extends toward a direction of the gearbox 20 and is in a transmission connection to the gearbox 20. The motor shaft 11 rotates and drives, by using the gearbox 20, the brake 101 to brake the vehicle 2000.

In other words, the brake motor 10 and the gearbox 20 are adjacently arranged, and the motor shaft 11 of the brake motor 10 extends into the gearbox 20 and is in a transmission connection to the gearbox 20. When the motor shaft 11 of the brake motor 10 rotates around an axis of the motor shaft 11, the gearbox 20 is driven to rotate synchronously, to achieve effect of synchronously driving the gearbox 20 to rotate.

The gearbox 20 includes an input end 20a and an output end 20b, and the input end 20a and the output end 20b are disposed side by side in a direction perpendicular to the motor shaft 11. The input end 20a is in a transmission connection to the motor shaft 11 extending out of the brake motor 10, and the output end 20b is in a transmission connection to the brake 101, so that when the motor shaft 11 of the brake motor 10 rotates and drives the gearbox 20 to rotate, the gearbox 20 can drive the brake 101 to act.

To facilitate an understanding of a process in which the electro-mechanical brake apparatus 100 in this application brakes the vehicle 2000, embodiments in this specification of this application first describe the brake 101.

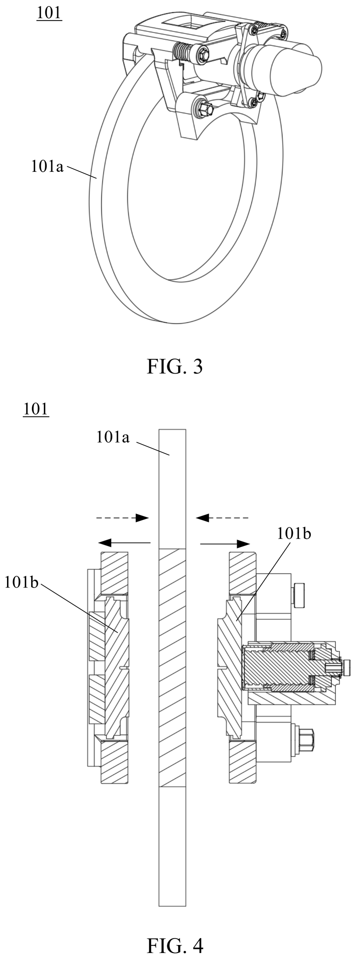

FIG. 3 is a diagram of an appearance structure of the brake 101 from a side perspective according to an embodiment of this application. FIG. 4 is a sectional diagram of a structure of the brake 101 from a side perspective according to the embodiment shown in FIG. 3 of this application. As shown in FIG. 3 and FIG. 4, the brake 101 includes a brake disc 101a and a friction plate 101b. The brake disc 101a is fastened to the wheel 1001 of the vehicle 2000. In a traveling process of the vehicle 2000, the brake disc 101a may rotate with the wheel 1001.

There are two friction plates 101b, the two friction plates 101b are arranged on two opposite sides of the brake disc 101a in a thickness direction of the brake disc 101a, and the friction plates 101b are in a transmission connection to the gearbox 20.

When the brake motor 10 drives, by using the gearbox 20, the brake 101 to brake the vehicle 2000, the gearbox 20 drives the two friction plates 101b to move close to each other (as shown by dashed arrows in the figure), and the two friction plates 101b may be respectively in contact with two opposite end surfaces of the brake disc to generate friction forces, to reduce a rotation speed of the brake disc. Because the brake disc rotates synchronously with the wheel 1001, a decrease in the rotation speed of the brake disc synchronously causes a decrease in the rotation speed of the wheel 1001, to achieve braking effect on the wheel 1001, and implement a function of the electro-mechanical brake apparatus 100 to brake the vehicle 2000.

The following describes the electro-mechanical brake apparatus 100 in this application with reference to specific embodiments and accompanying drawings of this specification of this application.

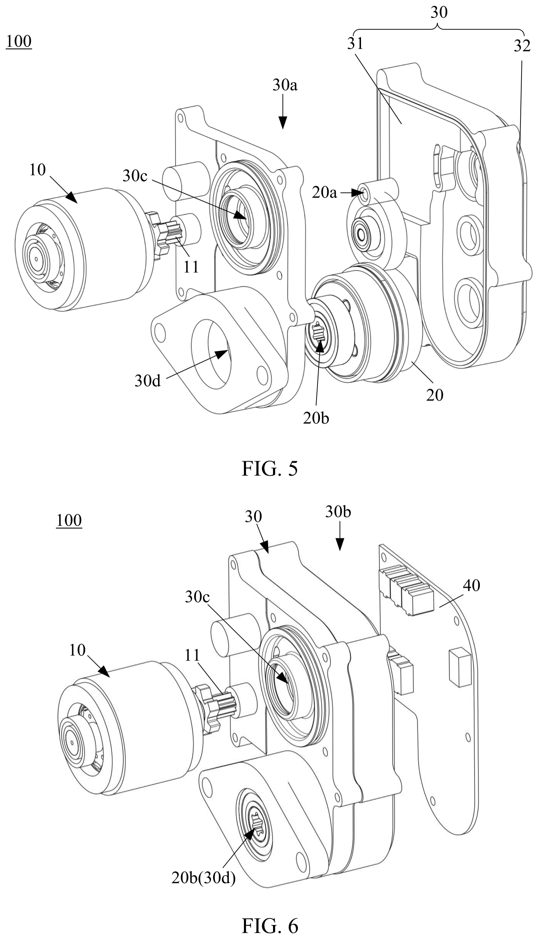

FIG. 5 is an exploded diagram of a structure of the electro-mechanical brake apparatus 100 from a side perspective according to an embodiment of this application. FIG. 6 is an exploded diagram of a structure of the electro-mechanical brake apparatus 100 from another side perspective according to the embodiment shown in FIG. 5 of this application. As shown in FIG. 5 and FIG. 6, the electro-mechanical brake apparatus 100 in this application includes a housing 30 and a controller 40. In a direction of the motor shaft 11 of the brake motor 10, the brake motor 10, the gearbox 20, and the controller 40 are sequentially arranged. The housing 30 is disposed on a side that is of the brake motor 10 and that is close to the gearbox 20, and both the gearbox 20 and the controller 40 are accommodated in the housing 30.

The housing 30 is fastened to the brake motor 10, and the motor shaft 11 of the brake motor 10 may at least partially extend into the housing 30, to be in a transmission connection to the gearbox 20, and drive the gearbox 20 for transmission.

The controller 40 is electrically connected to the brake motor 10, to drive the brake motor 10 to rotate, so that the brake motor 10 drives, by using the gearbox 20, the brake 101 to brake the vehicle 2000.

It may be understood that in this specification of this application, "in the direction of the motor shaft 11 of the brake motor 10" is in an axial direction of the motor shaft 11 of the brake motor 10, and may be briefly described as "in the axial direction of the motor shaft 11" in this specification of this application. The housing 30 is configured to accommodate the gearbox 20 and the controller 40, and can achieve effect of supporting and protecting functional mechanical parts of the gearbox 20 and the controller 40.

The housing 30 includes a spacer 31 fastened in the housing 30. In the axial direction of the motor shaft 11 of the brake motor 10, the gearbox 20 and the controller 40 are spaced apart and accommodated in the housing 30, and the spacer 31 is disposed at a spacing between the gearbox 20 and the controller 40.

In a plane direction of the spacer 31, an outer edge of the spacer 31 may match an inner edge of the housing 30, to improve effect of the spacer 31 to separate the gearbox 20 and the controller 40.

The plane direction of the spacer 31 is perpendicular to the axial direction of the motor shaft 11, so that an inner cavity that is of the housing 30 and that is for accommodating the gearbox 20 and the controller 40 can be divided into a first accommodation cavity 30a and a second accommodation cavity 30b.

Specifically, as shown in FIG. 5, the first accommodation cavity 30a is closer to the brake motor 10 than the second accommodation cavity 30b, and the gearbox 20 is accommodated in the first accommodation cavity 30a.

An input hole 30c and an output hole 30d are provided on a side that is of the housing 30 and that faces the brake motor 10. The input hole 30c and the output hole 30d are spaced apart in the direction perpendicular to the motor shaft 11, and both the input hole 30c and the output hole 30d penetrate an outer wall of the housing 30 to the first accommodation cavity 30a in a thickness direction of the housing 30.

The input hole 30c and the input end 20a of the gearbox 20 are correspondingly disposed, so that the motor shaft 11 can extend into the housing 30 from the input hole 30c and be in a transmission connection to the input end 20a of the gearbox 20. The output hole 30d and the output end 20b of the gearbox 20 are correspondingly disposed, so that the output end 20b of the gearbox 20 can be in a transmission connection to the brake 101, and the gearbox 20 can drive the brake 101 to brake the vehicle 2000.

It may be understood that in the direction perpendicular to the motor shaft 11, the input end 20a and the output end 20b of the gearbox 20 are disposed side by side, and the input hole 30c and the output hole 30d each are provided on the housing 30. Therefore, the housing 30 can accommodate the gearbox 20 in the first accommodation cavity 30a, so that effect of supporting and fastening the gearbox 20 is achieved, and a requirement for a transmission connection between the gearbox 20 and each of the brake motor 10 and the brake 101 can be met, to implement a transmission function of the gearbox 20.

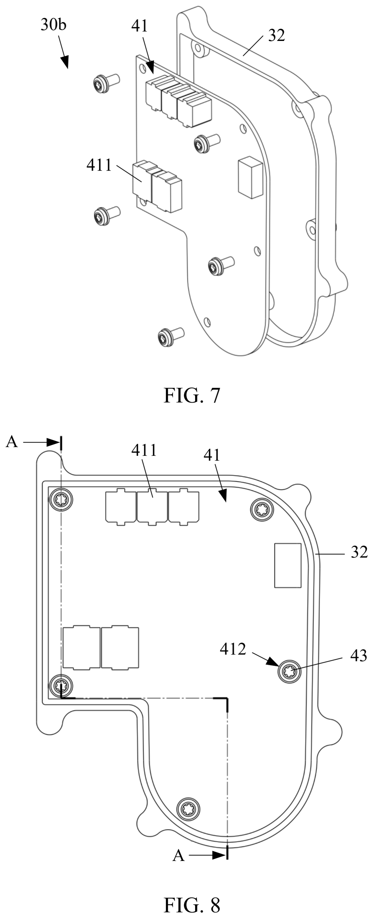

Refer to FIG. 7 together with FIG. 6. FIG. 7 is an exploded diagram of structures of the housing 30 and the controller 40 of the electro-mechanical brake apparatus 100 from a side perspective according to an embodiment of this application. As shown in FIG. 6 and FIG. 7, the controller 40 is accommodated in the second accommodation cavity 30b.

Specifically, the housing 30 includes a cover 32, and the cover 32 is fastened relative to the spacer 31. In the axial direction of the motor shaft 11, the cover 32 and the spacer 31 are parallel and spaced apart, and the cover 32 is located on a side that is of the spacer 31 and that is away from the gearbox 20, so that the cover 32 and the spacer 31 can enclose to form the second accommodation cavity 30b in the housing 30, and the controller 40 can be accommodated in the second accommodation cavity 30b and separated from the gearbox 20.

It may be understood that the gearbox 20 is disposed in the first accommodation cavity 30a, and the controller 40 is disposed in the second accommodation cavity 30b, so that effect of the spacer 31 to separate the gearbox 20 and the controller 40 can be achieved. This can avoid the following case: A lubricant in the gearbox 20 is spattered on the controller 40 in a running process of the gearbox 20, direct contact between the lubricant and a functional element on the controller 40 has adverse impact on operating performance of the controller 40, and a service life of the controller 40 is reduced.

In other words, the gearbox 20 and the controller 40 are separated by using the spacer 31, so that normal operating of the controller 40 can be ensured, and the service life of the controller 40 can be increased.

In an embodiment, the cover 32 is in a detachable connection to the housing 30.

In this embodiment, the cover 32 is in a detachable connection to the housing 30, so that the cover 32 can be detached from the housing 30, and a side that is of the housing 30 and that is away from the brake motor 10 can form an open state, that is, a cavity of the second accommodation cavity 30b is exposed outward, so that the controller 40 can be easily installed in the second accommodation cavity 30b, or the controller 40 can be easily replaced, removed, or the like. In other words, assembly efficiency of the controller 40 can be improved.

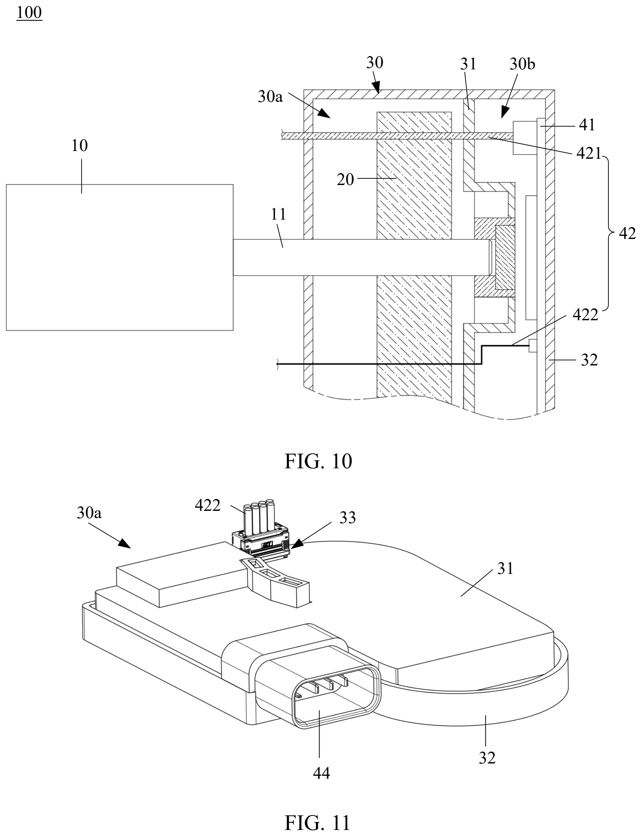

Further, as shown in FIG. 6 and FIG. 7, the controller 40 includes a circuit board 41 and a transmission member 42 that are electrically connected (referring to FIG. 10).

Several electronic components 411 may be integrated into the circuit board 41, and the electronic components 411 may be electrically connected to each other, to implement signal transmission between the electronic components 411. The circuit board 41 is configured to drive and control an operating status of the brake motor 10, so that the brake motor 10 can drive the brake 101 to brake the vehicle 2000 by using the gearbox 20.

The transmission member 42 is configured to implement an electrical connection between the circuit board 41 and each of the brake motor 10 and another functional mechanical part of the electro-mechanical brake apparatus 100, and is configured to transmit a control signal or a power signal sent by the circuit board 41, so that the circuit board 41 can control the operating status of the brake motor 10 or an operating status of the another functional mechanical part.

Specifically, as shown in FIG. 7, the circuit board 41 may be of a plate structure. In the axial direction of the motor shaft 11, the spacer 31, the circuit board 41, and the cover 32 are arranged in parallel, and the circuit board 41 is located between the spacer 31 and the cover 32.

It may be understood that because several electronic components 411 are usually integrated into the circuit board 41, the circuit board 41 is usually of a plate structure, and a thickness of the circuit board 41 in a direction perpendicular to a plane of the circuit board 41 is the smallest. The circuit board 41 and the spacer 31 are arranged in parallel, so that an arrangement direction of the circuit board 41 fits an internal structure of the housing 30, to reduce space occupied by the circuit board 41 in the housing 30. This implements a miniaturization design of the housing 30, and further reduces a size of the electro-mechanical brake apparatus 100 in this application.

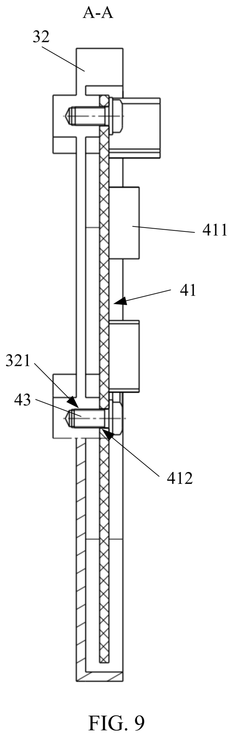

In an embodiment, refer to FIG. 8 and FIG. 9 together with FIG. 7. FIG. 8 is a diagram of a structure of the electro-mechanical brake apparatus 100 with a part of a structure omitted from a side perspective according to the embodiment shown in FIG. 7 of this application. FIG. 9 is a sectional diagram of a structure of the electro-mechanical brake apparatus 100 at a position A-A from a side perspective according to the embodiment shown in FIG. 8 of this application. As shown in FIG. 7 to FIG. 9, the circuit board 41 is fastened to the cover 32, and is accommodated in the second accommodation cavity 30b formed through enclosing of the spacer 31 and the cover 32. That is, the circuit board 41 is fastened to a surface of a side that is of the cover 32 and that faces the second accommodation cavity 30b.

Specifically, as shown in FIG. 8 and FIG. 9, the circuit board 41 is provided with a plurality of fastening holes 412 that are spaced apart, and the plurality of fastening holes 412 penetrate the circuit board 41 in the direction perpendicular to the plane of the circuit board 41.

A fastener 43 is disposed corresponding to each fastening hole 412. Each fastener 43 extends into one fastening hole 412 and is fastened to the cover 32.

For example, as shown in FIG. 9, the fastener 43 may be, but is not limited to, a screw. A threaded hole 321 adapted to the fastener 43 is disposed corresponding to each fastener 43 and on the cover 32, and each threaded hole extends in the direction perpendicular to the plane of the circuit board 41. After passing through the fastening hole 412 corresponding to the fastener 43, the fastener 43 extends into the threaded hole 321 corresponding to the fastener 43 on the cover 32, to achieve effect that the fastener 43 is fastened to the cover 32, and then the circuit board 41 is fastened to the cover 32.

It may be understood that because the cover 32 is in a detachable connection to the housing 30, when the circuit board 41 is fastened to the cover 32, that is, the cover 32 of the housing 30 is disposed on a side close to the circuit board 41, facilitating installation and maintenance of the circuit board 41.

In addition, the circuit board 41 is fastened to the side that is of the cover 32 and that faces the second accommodation cavity 30b, so that the circuit board 41 can be accommodated in the second accommodation cavity 30b. In other words, the circuit board 41 is accommodated in the housing 30, so that the housing 30 can achieve effect of accommodating and protecting several electronic components 411 integrated into the circuit board 41. This avoids the following case: External impurities, dust, and the like erode the circuit board 41, affect operating reliability of the circuit board 41, and reduce a service life of the circuit board 41.

It should be noted that in the embodiments shown in FIG. 8 and FIG. 9, only one possible arrangement manner and one possible quantity of the fasteners 43 are used as an example for description, but a quantity and an arrangement manner of the fasteners 43 used in this embodiment of this application are not limited thereto. In another embodiment of this application, a quantity of fasteners 43 used to fasten the circuit board 41 and the cover 32 may be adjusted based on an actual design requirement.

In addition, in the embodiments shown in FIG. 8 and FIG. 9, only one possible manner of the connection between the circuit board 41 and the cover 32 is used as an example for description, but a manner in which the circuit board 41 is fastened to the cover 32 is not limited thereto. In another embodiment of this application, the circuit board 41 may alternatively be fastened to the cover 32 through but not limited to riveting, soldering, buckling, or bonding, or in another possible manner. This is not specifically limited in this application.

In an embodiment, the spacer 31 may be fastened to the cover 32, so that the spacer 31 and the circuit board 41 are fastened in the housing 30 with the cover 32. That is, both the spacer 31 and the circuit board 41 are accommodated in the housing 30. The circuit board 41 is fastened to the cover 32, and the spacer 31 and the circuit board 41 are fastened to the cover 32, facilitating installation and sealing protection of the circuit board 41 in the housing 30.

In an embodiment, a material of the spacer 31 may be but is not limited to resin.

In an embodiment, the spacer 31 may be formed on the cover 32 by using an injection molding process, but is not limited to that, and the spacer 31 may be in at least partial contact with the circuit board 41 to fasten the circuit board 41.

It may be understood that the spacer 31 is formed on the cover 32 by using an injection molding process, and an injection molding process of the spacer 31 further synchronously implements fastening of the circuit board 41 on the cover 32, to ensure that the spacer 31 seals and protects the circuit board 41, and simplify an assembly process of the circuit board 41.

Further, FIG. 10 is a diagram of a structure of the electro-mechanical brake apparatus 100 with a part of a structure omitted from a side perspective according to an embodiment of this application. As shown in FIG. 10, in the direction of the motor shaft 11 of the brake motor 10, the transmission member 42 passes through the spacer 31 and the gearbox 20 and is electrically connected between the brake motor 10 and the circuit board 41.

To be specific, one end of the transmission member 42 is electrically connected to the circuit board 41, and the other end of the transmission member 42 first passes through the spacer 31 from the second accommodation cavity 30b to extend into the first accommodation cavity 30a, passes through the gearbox 20 located in the first accommodation cavity 30a, extends out of the housing 30, and extends to be electrically connected to the brake motor 10, to achieve effect that the transmission member 42 is electrically connected between the circuit board 41 and the brake motor 10, and implement a function of transmitting a signal applied by the circuit board 41 to the brake motor 10.

As shown in FIG. 10, the transmission member 42 includes a conductive copper bar 421, and the conductive copper bar 421 is electrically connected between the controller 40 and the brake motor 10, so that the controller 40 transmits a power signal to the brake motor 10 by using the conductive copper bar 421, to drive the brake motor 10 to operate.

Specifically, the conductive copper bar 421 extends in a direction parallel to the motor shaft 11 of the brake motor 10. To be specific, one end of the conductive copper bar 421 is electrically connected to the circuit board 41 accommodated in the second accommodation cavity 30b, and the other end that is of the conductive copper bar 421 and that is away from the circuit board 41 extends outward, passes through the spacer 31 and extends into the first accommodation cavity 30a, and passes through the gearbox 20 and extends out of the housing 30, to achieve effect of extending in the direction parallel to the motor shaft 11 of the brake motor 10 to be electrically connected to the brake motor 10.

It may be understood that because the conductive copper bar 421 is rigid and is uneasy to bend, the conductive copper bar 421 cannot adapt to an internal structure shape of the housing 30 well. The conductive copper bar 421 is disposed to extend in the direction parallel to the motor shaft 11 of the brake motor 10, sequentially passes through the spacer 31 and the gearbox 20, and extends out of the housing 30 to be electrically connected to the brake motor 10, facilitating arrangement and installation of the conductive copper bar 421. In addition, space of each functional mechanical part accommodated in the first accommodation cavity 30a and the second accommodation cavity 30b can be fully used, without a need to design separate space for arranging the conductive copper bar 421.

In addition, the conductive copper bar 421 can carry high-power signal transmission, and the controller 40 transmits the power signal by using the conductive copper bar 421, to ensure that transmit power of the transmission member 42 meets an operating requirement of the brake motor 10. This can improve operating reliability of the electro-mechanical brake apparatus 100 in this application.

In an embodiment, an outer surface of the conductive copper bar 421 may be coated with an insulation layer (not shown in the figure).

The outer surface of the conductive copper bar 421 is coated with the insulation layer, so that the following case can be avoided: Signal crosstalk, a short circuit, or another bad condition is caused by contact between the conductive copper bar 421 and an adjacent conductive object. In other words, insulation processing is performed on the outer surface of the conductive copper bar 421, so that signal transmission reliability of the conductive copper bar 421 can be improved, and safety of the electro-mechanical brake apparatus 100 can be improved.

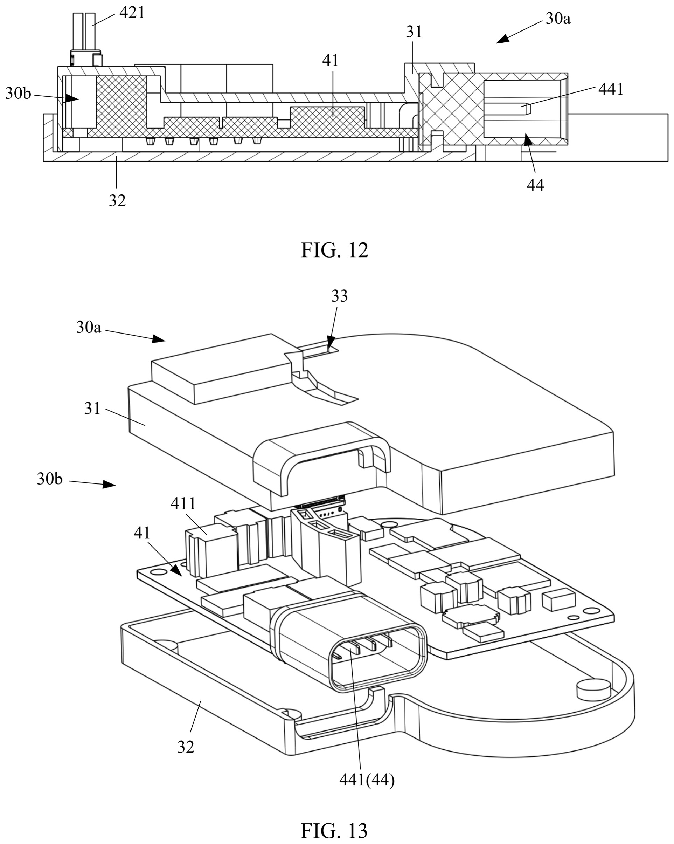

Refer to FIG. 11 to FIG. 13 together with FIG. 10. FIG. 11 is a diagram of a structure of the electro-mechanical brake apparatus 100 with a part of a structure omitted from a side perspective according to an embodiment of this application. FIG. 12 is a sectional diagram of a structure of the electro-mechanical brake apparatus 100 from a side perspective according to the embodiment shown in FIG. 10 of this application. FIG. 13 is an exploded diagram of a structure of the electro-mechanical brake apparatus 100 from a side perspective according to the embodiment shown in FIG. 10 of this application.

The transmission member 42 includes a transmission line 422, and the transmission line 422 is electrically connected between the circuit board 41 and the brake motor 10, to transmit a control signal to the brake motor 10, and control the brake motor 10 to implement different operating states.

Specifically, as shown in FIG. 10, one end of the transmission line 422 is electrically connected to the circuit board 41, and one end that is of the transmission line 422 and that is away from the circuit board 41 extends out of the circuit board 41, passes through the spacer 31 from the second accommodation cavity 30b and extends into the first accommodation cavity 30a, and then passes through the gearbox 20 located in the first accommodation cavity 30a and extends out of the housing 30.

As shown in FIG. 11, a line groove 33 is provided in the housing 30 in the axial direction of the motor shaft 11 of the brake motor 10, and the transmission line 422 is embedded in the line groove 33 to pass through the spacer 31 and the gearbox 20.

The line groove 33 is provided in the housing 30. For example, as shown in FIG. 11 to FIG. 13, the line groove 33 may be provided on the spacer 31, and in the direction perpendicular to the plane direction of the spacer 31, that is, in the axial direction of the motor shaft 11, the line groove 33 penetrates the spacer 31, so that the transmission line 422 passes through the spacer 31 when being embedded in the line groove 33.

An extension shape of the line groove 33 in the housing 30 is the same as a wiring direction of the transmission line 422 in the housing 30, so that the transmission line 422 can be embedded in the line groove 33 and can be electrically connected between the circuit board 41 and the brake motor 10, to transmit a control signal applied by the circuit board 41 to the brake motor 10.

It may be understood that the transmission line 422 arranged in the housing 30 is embedded in the line groove 33, to achieve effect of fastening the transmission line 422, and ensure fastening effect of the transmission line 422 in the housing 30. This avoids the following case: The transmission line 422 is loose, falls off, or the like to affect normal operating of another functional mechanical part in the electro-mechanical brake apparatus 100. In addition, signal transmission reliability of the transmission line 422 can be improved.

In addition, the controller 40 transmits the control signal through the transmission line 422, and the transmission line 422 extends in the line groove 33 in the housing 30, to save space occupied by the transmission line 422 in the electro-mechanical brake apparatus 100, and ensure reliable transmission of the control signal.

It should be noted that in the embodiment shown in FIG. 10 in this application, only one possible wiring manner of the conductive copper bar 421 and the transmission line 422 in the housing 30 is used as an example for description, but does not indicate an actual arrangement manner of the conductive copper bar 421 and the transmission line 422 in the housing 30. In this embodiment of this application, the arrangement manner of the conductive copper bar 421 and the transmission line 422 in the housing 30 is adjusted based on an actual design requirement.

For example, in a possible embodiment, when the conductive copper bar 421 passes through the gearbox 20, extension of the conductive copper bar 421 in the gearbox 20 needs to avoid a functional mechanical part such as a transmission gear in the gearbox 20. In this way, the conductive copper bar 421 passes through the gearbox 20 to implement a miniaturization and simplification design of the electro-mechanical brake apparatus 100 in this application, without affecting the gearbox 20 or another functional mechanical part in the housing 30, to improve operating reliability of the electro-mechanical brake apparatus 100 in this application.

In an embodiment, as shown in FIG. 11 to FIG. 13, the controller 40 is further provided with an electrical interface 44, and the electrical interface 44 can be electrically connected to an external power supply (not shown in the figure), so that the external power supply can provide electric energy for the controller 40 to control the operating status of the brake motor 10, and can provide electric energy for the electro-mechanical brake apparatus 100 in this application to operate normally.

Specifically, several electric-conductors 441 are disposed in the electrical interface 44, and the several electric-conductors 441 are spaced apart. One end that is of the electric-conductor 441 and that is located in the housing 30 is electrically connected to each electronic component 411 integrated into the circuit board 41, and the other end of the electric-conductor 441 extends out of the housing 30 and is exposed outward, to be electrically connected to an external power supply.

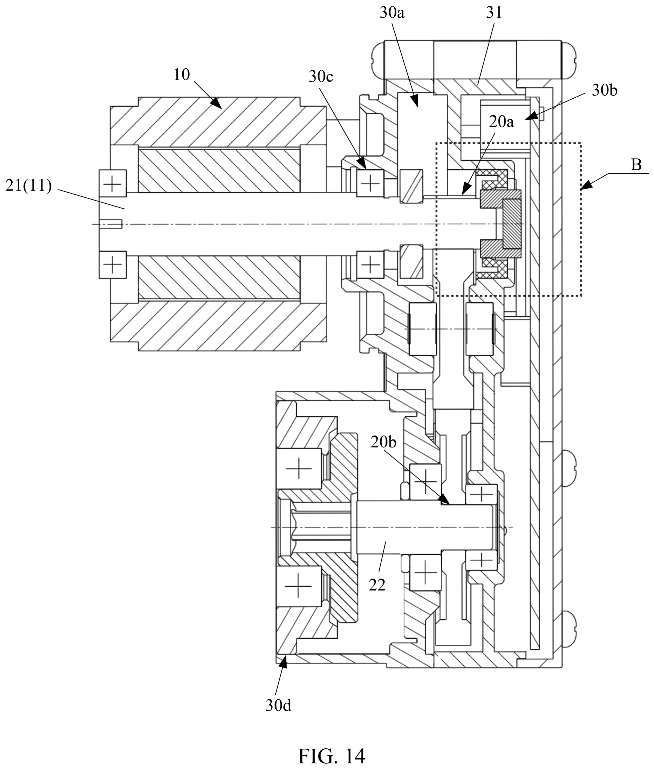

In an embodiment, refer to FIG. 14 together with FIG. 5. FIG. 14 is a sectional diagram of a structure of the electro-mechanical brake apparatus 100 with a part of a structure omitted from a side perspective according to an embodiment of this application. As shown in FIG. 14, the gearbox 20 includes an input shaft 21, and the input shaft 21 is in coaxial transmission with the motor shaft 11.

Specifically, the input shaft 21 is located at the input end 20a of the gearbox 20, and in an axial direction of the input shaft 21, an end that is of the input shaft 21 and that is away from the spacer 31 extends out of the housing 30 from the input hole 30c of the housing 30.

The brake motor 10 is located on a side that is of the input shaft 21 and that is away from the spacer 31, and the axis of the motor shaft 11 of the brake motor 10 coincides with an axis of the input shaft 21, so that coaxial transmission between the motor shaft 11 and the input shaft 21 can be implemented.

It may be understood that when the motor shaft 11 of the brake motor 10 rotates around the axis of the motor shaft 11, because the input shaft 21 is in coaxial transmission with the motor shaft 11, the motor shaft 11 synchronously drives the input shaft 21 to rotate around the axis of the input shaft 21, to drive the gearbox 20 to drive the brake 101 to operate.

For example, as shown in FIG. 14, the motor shaft 11 of the brake motor 10 and the input shaft 21 of the gearbox 20 are of an integrated structure.

Specifically, an end that is of the motor shaft 11 of the brake motor 10 and that is away from a motor rotor of the brake motor 10 extends into the housing 30 from the input hole 30c of the housing 30, and is in a transmission connection to the gearbox 20 located in the first accommodation cavity 30a.

In this embodiment, the motor shaft 11 of the brake motor 10 extends into the gearbox 20 and is in a transmission connection to the gearbox 20. The motor shaft 11 of the brake motor 10 can synchronously implement an input shaft function of the gearbox 20, and the input shaft 21 of the gearbox 20 does not need to be separately disposed. In addition, a mechanical part used to implement a coaxial transmission connection between the motor shaft 11 and the input shaft 21 can be eliminated. This can simplify an internal structure of the electro-mechanical brake apparatus 100 and reduce a size.

In an embodiment, as shown in FIG. 14, the gearbox 20 includes an output shaft 22, and the output shaft 22 is in a transmission connection to the brake 101.

Specifically, the output shaft 22 is located at the output end 20b of the gearbox 20, and in an axial direction of the output shaft 22, an end that is of the output shaft 22 and that is away from the spacer 31 extends out of the housing 30 from the output hole 30d of the housing 30, and the part that is of the output shaft 22 and that extends out can be in a transmission connection to the brake 101, to implement a function that the brake motor 10 can drive the brake 101 to brake the vehicle 2000 by using the gearbox 20. To be specific, an action input by the input shaft 21 of the gearbox 20 can be transferred out of the gearbox 20, to achieve effect that the gearbox 20 is in a transmission connection between the brake motor 10 and the brake 101.

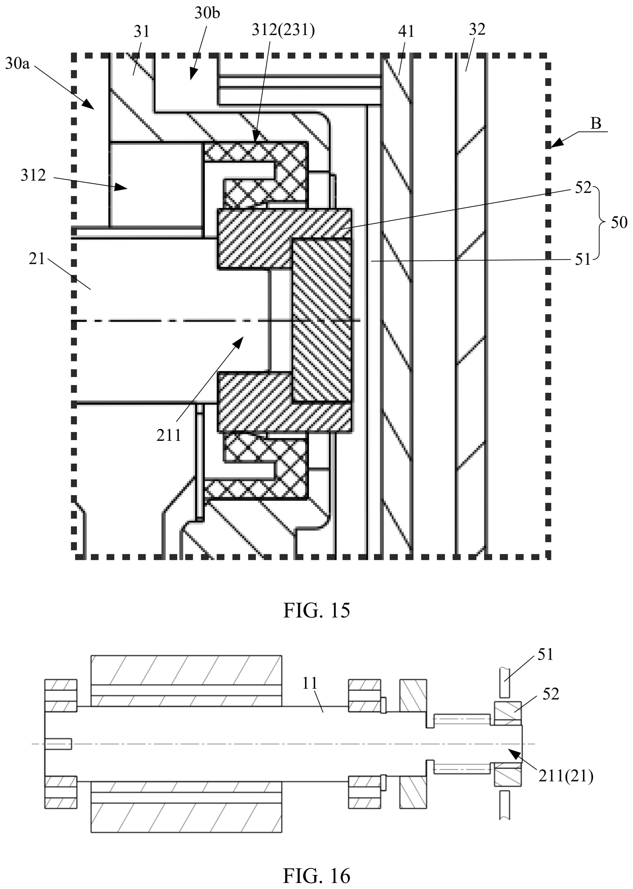

In an embodiment, refer to FIG. 15 together with FIG. 14. FIG. 15 is an enlarged diagram of a partial structure of the electro-mechanical brake apparatus 100 at a position B from a side perspective according to the embodiment shown in FIG. 14 of this application. As shown in FIG. 14 and FIG. 15, the electro-mechanical brake apparatus 100 includes a position sensor 50, and the position sensor 50 is configured to monitor a rotation angle of the brake motor 10.

The position sensor 50 includes a stator 51 and a rotor 52. The input shaft 21 includes an extension section 211 that extends toward the circuit board 41 and passes through the spacer 31, the rotor 52 is located at an end part of the extension section 211 and is coaxially fastened to the extension section 211, the stator 51 is fastened to the circuit board 41, and a central axis of the stator 51 coincides with a rotation axis of the input shaft 21.

Specifically, as shown in FIG. 15, the position sensor 50 may be, but is not limited to, a magnetoresistive sensor, and the rotor 52 is sleeved on the extension section 211, and is located on a side that is of the extension section 211 and that is away from the brake motor 10.

The stator 51 of the position sensor 50 is fastened to the circuit board 41, and is located on a surface that is of the circuit board 41 and that is close to the gearbox 20, that is, the stator 51 is located on a side that is of the circuit board 41 and that is away from the cover 32. The input shaft 21 rotates around the axis of the input shaft 21 to synchronously drive the rotor 52 to rotate.

It may be understood that when the input shaft 21 rotates around the axis of the input shaft 21 and synchronously drives the rotor 52 to rotate, the rotor 52 rotates relative to the stator 51 around the rotation axis of the input shaft 21, and the stator 51 is fastened to the circuit board 41, to fit rotation of the rotor 52 to implement a monitoring function. In other words, through joint fitting between the stator 51 and the rotor 52, the position sensor 50 can implement a function of monitoring the rotation angle of the brake motor 10.

Because the input shaft 21 of the gearbox 20 is in coaxial transmission with the motor shaft 11 of the brake motor 10, the input shaft 21 of the gearbox 20 can reflect a rotation speed of the motor shaft 11.

In this case, the position sensor 50 is disposed between the input shaft 21 of the gearbox 20 and the circuit board 41, facilitating a disposition of the position sensor 50. In addition, the circuit board 41 may be directly electrically connected to the stator 51 to receive a detection signal, eliminating a line between the position sensor 50 and the circuit board 41, and simplifying internal wiring of the electro-mechanical brake apparatus 100.

It should be noted that in the embodiment shown in FIG. 15, when the position sensor 50 is a magnetoresistive sensor, only a possible arrangement manner of the stator 51 and the rotor 52 of the position sensor 50 is used as an example for description. In another embodiment of this application, the position sensor 50 may alternatively be, but is not limited to, an electric eddy current sensor or a photoelectric sensor.

For example, in a possible embodiment, FIG. 16 is a sectional diagram of a structure of the brake motor 10 of the electro-mechanical brake apparatus 100 from a side perspective according to an embodiment of this application. As shown in FIG. 16, when the position sensor 50 is an electric eddy current sensor or a photoelectric sensor, the stator 51 of the position sensor 50 is coaxially sleeved on the periphery of the rotor 52, and in a radial direction of the input shaft 21, an outer circumferential surface of the rotor 52 and an inner circumferential surface of the stator 51 are spaced apart.

It may be understood that the rotor 52 and the stator 51 of the electric eddy current sensor or the photoelectric sensor are spaced apart in the radial direction of the input shaft 21. In this case, different types of position sensors 50 can separately implement reliable installation and monitoring functions.

In an embodiment, still refer to FIG. 15. The spacer 31 is provided with a through hole 311 that allows the motor shaft 11 to pass through, that is, the extension section 211 of the input shaft 21 of the gearbox 20 can pass through the through hole 311. The gearbox 20 includes an oil sealing member 23, and an outer circumferential surface 231 of the oil sealing member 23 is attached to an inner circumferential surface 312 of the through hole 311 to seal the through hole 311. To be specific, in a radial direction of the motor shaft 11, the oil sealing member 23 is sleeved between the rotor 52 and the through hole 311 of the spacer 31, to achieve effect of sealing the through hole 311, and further improve separation effect between the first accommodation cavity 30a and the second accommodation cavity 30b.

For example, as shown in FIG. 15, when the position sensor 50 is a magnetoresistive sensor, because in the axial direction of the motor shaft 11, the stator 51 is disposed at a spacing on a side that is of the extension section 211 and that is away from the brake motor 10, that is, the stator 51 is disposed on the circuit board 41 in the second accommodation cavity 30b, the oil sealing member 23 is sleeved on the periphery of the rotor 52, that is, in a radial direction of the extension section 211, the rotor 52 and the oil sealing member 23 are sequentially sleeved on the extension section 211. In this way, the through hole 311 of the spacer 31 can be effectively sealed.

For example, when the position sensor 50 is an electric eddy current sensor or a photoelectric sensor, because in the radial direction of the motor shaft 11, the stator 51 is disposed at a spacing at the periphery of the rotor 52, the oil sealing member 23 is sleeved on a periphery of the motor shaft 11, so that the gearbox 20 and the position sensor 50 can be effectively separated.

It may be understood that the oil sealing member 23 is disposed between the input shaft 21 and the spacer 31, or the oil sealing member 23 is disposed between the rotor 52 and the spacer 31, so that the through hole 311 of the spacer 31 can be effectively sealed, and the following case can be avoided: A lubricant in the gearbox 20 passes through the through hole 311 and is in direct contact with the controller 40. This can ensure that the controller 40 reliably controls the brake motor 10.

In addition, corresponding to different types of position sensors 50, the oil sealing member 23 is disposed between the motor shaft 11 and the spacer 31, or the oil sealing member 23 is disposed between the rotor 52 and the spacer 31, so that the through hole 311 of the spacer 31 can be effectively sealed, and direct contact between the lubricant in the gearbox 20 and the position sensor 50 can be avoided. This can ensure monitoring precision of the position sensor 50 and improve a service life of the position sensor 50.

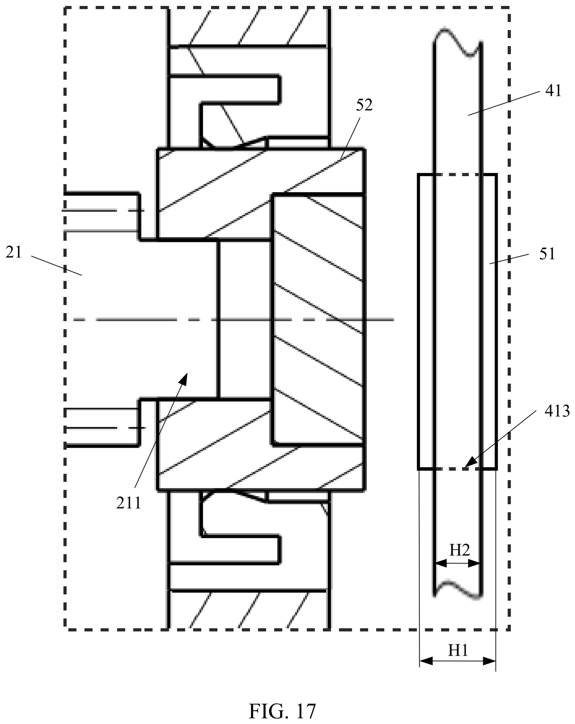

In an embodiment, FIG. 17 is a diagram of a partial structure of the brake motor 10 of the electro-mechanical brake apparatus 100 from a side perspective according to an embodiment of this application. As shown in FIG. 17, in the axial direction of the motor shaft 11, the circuit board 41 is provided with a positioning hole 413, the positioning hole 413 penetrates the circuit board 41 in a thickness direction of the circuit board 41, and the stator 51 is embedded in the positioning hole 413 of the circuit board 41, to achieve effect that the stator 51 is fastened to and integrated into the circuit board 41.

In addition, a position of the positioning hole 413 corresponds to a position of the rotor 52, so that the stator 51 embedded in the positioning hole 413 can fit and operate with the rotor 52 to implement a monitoring function of the position sensor 50.

In an embodiment, as shown in FIG. 17, in the axial direction of the input shaft 21, a thickness H1 of the stator 51 is greater than a thickness H2 of the circuit board 41. The stator 51 is embedded in the positioning hole 413 of the circuit board 41, so that it can be ensured that the stator 51 can fit the rotor 52 to implement the monitoring function of the position sensor 50, and after the stator 51 is assembled, an overall thickness of the circuit board 41 can be compressed. In this way, integration between the stator 51 and the circuit board 41 can be further improved, to further reduce space occupied by the circuit board 41 in the housing 30.

In an embodiment, the electro-mechanical brake apparatus 100 includes a locking mechanism, the locking mechanism is in a transmission connection to the gearbox 20, and the controller 40 is further configured to: drive a locking motor of the locking mechanism to rotate to lock or release a gear shaft of the gearbox 20 and control the gearbox for transmission.

In addition, the controller 40 is further configured to drive the locking motor of the locking mechanism to operate, so that a structure in which the controller 40 is separately disposed in the locking mechanism is eliminated, and integration of the electro-mechanical brake apparatus 100 is further improved.

In an embodiment, in an axial direction of the motor shaft 11, the locking motor of the locking mechanism and the circuit board 41 are located on a same side of the spacer 31, and the locking mechanism passes through the spacer 31 and is in a transmission connection to the gear shaft of the gearbox 20. The locking motor is disposed on a side that is of the spacer 31 and that is close to the circuit board 41, so that the spacer 31 can be used to form sealing protection for the locking motor. This ensures reliable operating of the locking mechanism.

A motor, a mechanical transmission mechanism, and a brake in an electro-mechanical brake apparatus are usually constructed as independent components, and an integration level is low. As a result, the electro-mechanical brake apparatus is too large in size to be arranged in the vehicle. A controller of the motor is usually fastened to the top of the motor, increasing an overall height of the electro-mechanical brake apparatus.

However, in this application, the electro-mechanical brake apparatus 100 drives, by using the brake motor 10, the gearbox 20 to rotate, to drive the brake 101 to brake the vehicle 2000. The brake motor 10 is controlled by the controller 40, the controller 40 and the brake motor 10 are on two opposite sides of the gearbox 20, and the controller 40 passes through the gearbox 20 and is electrically connected to the brake motor 10. A main structure of the controller 40 is usually plate-shaped. The controller 40 is arranged in a direction perpendicular to the direction of the motor shaft 11 of the brake motor 10, so that space occupied by the controller 40 in the electro-mechanical brake apparatus 100 can be reduced, and an overall size of the electro-mechanical brake apparatus 100 can be reduced.

In addition, the electro-mechanical brake apparatus 100 of this application further provides sealing protection on the controller 40 by using the spacer 31, to avoid direct contact between a lubricant in the gearbox 20 and the controller 40. This can ensure that the controller 40 reliably controls the brake motor 10.

Further, the vehicle 2000 provided in this application is braked by using the electro-mechanical brake apparatus 100 provided in this application. Because the electro-mechanical brake apparatus 100 provided in this application is small in size, internal space of the vehicle 2000 in this application is saved.

In other words, the vehicle 2000 provided in this application uses the electro-mechanical brake apparatus 100 in any one of the foregoing embodiments. Therefore, the vehicle 2000 in this application has all possible beneficial effect of the electro-mechanical brake apparatus 100 in any one of the foregoing embodiments.

It is clear that a person skilled in the art can make various modifications and variations to this application without departing from the protection scope of this application. This application is intended to cover these modifications and variations of this application provided that they fall within the scope of the claims of this application and an equivalent technology thereof.

## Claims

1. An electro-mechanical brake apparatus with a brake motor and a controller separated, wherein the electro-mechanical brake apparatus comprises a brake motor, a gearbox, and a controller, the controller is configured to drive the brake motor to rotate, and the brake motor is configured to drive, by using the gearbox, a brake to brake a vehicle;
the gearbox and the controller are accommodated in a same housing, and the housing is fastened to the brake motor; and
the housing comprises a spacer, in a direction of a motor shaft of the brake motor, the brake motor, the gearbox, the spacer, and the controller are sequentially arranged, and the controller passes through the spacer and the gearbox and is electrically connected to the brake motor.

2. The electro-mechanical brake apparatus according to claim 1, wherein the controller comprises a circuit board and a transmission member;
the circuit board and the spacer are arranged in parallel in the direction of the motor shaft of the brake motor; and
in the direction of the motor shaft of the brake motor, the transmission member passes through the spacer and the gearbox and is electrically connected between the brake motor and the circuit board.

3. The electro-mechanical brake apparatus according to claim 2, wherein the housing comprises a detachable cover, and the circuit board and the cover are arranged in parallel in the direction of the motor shaft of the brake motor.

4. The electro-mechanical brake apparatus according to claim 3, wherein the circuit board is fastened to the cover and is fastened in the housing with the cover.

5. The electro-mechanical brake apparatus according to claim 4, wherein the spacer is fastened to the cover, and the spacer and the circuit board are fastened in the housing with the cover.

6. The electro-mechanical brake apparatus according to claim 5, wherein a material of the spacer is resin, the spacer is formed on the cover through injection molding, and the spacer is in at least partial contact with the circuit board to fasten the circuit board.

7. The electro-mechanical brake apparatus according to claim 2, wherein the transmission member comprises a conductive copper bar, and the controller transmits a power signal to the brake motor by using the conductive copper bar; and
the conductive copper bar extends in a direction parallel to the direction of the motor shaft of the brake motor, and an outer surface of the conductive copper bar is coated with an insulation layer.

8. The electro-mechanical brake apparatus according to claim 2, wherein the transmission member comprises a transmission line, and the controller transmits a control signal to the brake motor through the transmission line; and
a line groove is provided in the housing in the direction of the motor shaft of the brake motor, and the transmission line is embedded in the line groove to pass through the spacer and the gearbox.

9. The electro-mechanical brake apparatus according to any one of claims 2 to 8, wherein the gearbox comprises an input shaft, the input shaft is in coaxial transmission with the motor shaft, the electro-mechanical brake apparatus comprises a position sensor configured to monitor a rotation angle of the brake motor, and the position sensor comprises a stator and a rotor;
the input shaft comprises an extension section extending toward the circuit board and passing through the spacer, and the rotor is coaxially fastened to the extension section; and
the stator is fastened to the circuit board, and a central axis of the stator coincides with a rotation axis of the input shaft.

10. The electro-mechanical brake apparatus according to claim 9, wherein the stator of the position sensor is fastened to a surface that is of the circuit board and that is close to the gearbox; and
the position sensor is a magnetoresistive sensor, and in an axial direction of the input shaft, the rotor and the stator of the position sensor are spaced apart; or
the position sensor is an electric eddy current sensor or a photoelectric sensor, the stator of the position sensor is coaxially sleeved on a periphery of the rotor, and in a radial direction of the input shaft, an outer circumferential surface of the rotor and an inner circumferential surface of the stator are spaced apart.

11. The electro-mechanical brake apparatus according to claim 10, wherein the spacer is provided with a through hole that allows the motor shaft to pass through, the housing of the gearbox comprises an oil sealing member, and an outer circumferential surface of the oil sealing member is attached to an inner circumferential surface of the through hole to seal the through hole; and
the position sensor is a magnetoresistive sensor, and the oil sealing member is sleeved on the periphery of the rotor; or
the position sensor is an electric eddy current sensor or a photoelectric sensor, and the oil sealing member is sleeved on a periphery of the motor shaft.

12. The electro-mechanical brake apparatus according to claim 9, wherein in an axial direction of the motor shaft, a thickness of the stator is greater than a thickness of the circuit board, and the stator is embedded in a positioning hole of the circuit board.

13. The electro-mechanical brake apparatus according to any one of claims 2 to 8, wherein the electro-mechanical brake apparatus comprises a locking mechanism, the locking mechanism is in a transmission connection to the gearbox, and the controller is further configured to: drive a locking motor of the locking mechanism to rotate to lock or release a gear shaft of the gearbox and control the gearbox for transmission.

14. The electro-mechanical brake apparatus according to claim 13, wherein in an axial direction of the motor shaft, the locking motor of the locking mechanism and the circuit board are located on a same side of the spacer, and the locking mechanism passes through the spacer and is in a transmission connection to the gear shaft of the gearbox.

15. A vehicle, comprising a wheel and the electro-mechanical brake apparatus according to any one of claims 1 to 14, wherein the electro-mechanical brake apparatus is configured to brake the wheel.
